# EUROPÄISCHE PATENTSCHRIFT

(11) **EP 1 595 090 B1**
(45) Veröffentlichungstag und Bekanntmachung des Hinweises auf die Patenterteilung: **07.06.2006**
(21) Anmeldenummer: 04711310.5
(22) Anmeldetag: 14.02.2004
(51) Int. Cl.: F16H 57/08

(54) **PLANETENRADTRÄGER**
PLANETARY GEAR CARRIER
PORTE-SATELLITES

(30) Priorität: 20.02.2003 DE 10307221
(43) Veröffentlichungstag der Anmeldung: 16.11.2005
(73) Patentinhaber: ZF FRIEDRICHSHAFEN AG, 88038 Friedrichshafen (DE)
(72) Erfinder: TIESLER, Peter, 88074 Meckenbeuren (DE); BIERMANN, Eberhard, 88214 Ravensburg (DE)
(86) Internationale Anmeldenummer: PCT/EP2004/001406
(87) Internationale Veröffentlichungsnummer: WO 2004/074715

(56) Entgegenhaltungen:
- EP-A- 0 738 843
- DE-A- 19 736 686
- DE-U- 29 623 080

## Beschreibung

Die Erfindung betrifft einen Planetenradträger für einen Planetenradsatz, nach dem Oberbegriff des Patentanspruchs 1.

Planetenradsätze mit Sonnenrad, Hohlrad, Planetenrädern und rotierendem Planetenradträger sind allgemein bekannt. Üblicherweise umfaßt der Planetenradträger dabei eine Nabe und ein Stegblech, in das Planetenradbolzen auf einem definierten Teilkreisdurchmesser axial eingesetzt sind. Die Planetenräder sind üblicherweise auf den Planetenradbolzen über Gleitlager oder Nadellager gelagert, wobei die notwendige SchmierÖlmenge zur Schmierung dieser Planetenradlagerung von der den Planetenrädern abgewandten Seite des Stegblechs her in axiale Sacklochbohrung der Planetenradbolzen eingebracht und von dort über in diese Axialbohrungen mündende Radialbohrungen der Planetenradbolzen der Planetenradlagerung zugeführt wird. Üblicherweise wird das SchmierÖL dabei von einem Innendurchmesser des (rotierenden) Planetenradträgers bzw. Stegblechs her zugeleitet, derart, daß das Schmiermittel aufgrund der Zentrifugalkraft am Stegblech entlang radial nach außen strömt. Zur Aufstauung von Schmiermittel im Bereich der axialen Schmierölzufuhr in die Planetenradbolzen wird beispielsweise in der gattungsgemäßen DE 36 686 A1 vorgeschlagen, axial an dem Stegblech eine Stauscheibe zu befestigen, die sich in radialer Richtung über den Bereich der axialen Schmiermittelzufuhr in die Planetenradbolzen erstreckt und zusammen mit der Stauscheibe eine Schmierölkammer bildet. Das von innen her anströmende Schmiermittel wird also in dieser Schmierölkammer aufgestaut und von dort in die Axialbohrungen der Planetenradbolzen geleitet.

Aus der DE 197 18 030 A1 beispielsweise ist ein Planetenradträger mit einer scheibenförmigen Ölstauscheibe bekannt, bei dem die Ölstauscheibe als Kunstoff-Formteil ausgebildet ist mit einer sternenförmigen Außenkontur und abgewinkelten Laschen axialer Erstreckung. Zur Bildung eine Schmierölkammer deckt die Ölstauscheibe im montierten Zustand die Bereiche der axialen Schmierölzuführung in die einzelnen Planetenradbolzen axial beabstandet ab, wobei die Außenkontur der Ölstauscheibe axial an dem Planetenradträger anliegt. Die abgewinkelten Laschen der Ölstauscheibe weisen Fanghaken auf und greifen im montierten Zustand auf einem Durchmesser kleiner dem Planetenradbolzen-Teilkreisdurchmesser axial in den Planetenradträger ein, wobei die Fanghaken am Innenumfang eines korbförmigen Abschnitt des Planetenradträgers verrasten.

Der Erfindung liegt die Aufgabe zugrunde, ein Planetenradträger mit einem axial an einem Stegblech des Planetenradträgers angrenzenden Ölfangblech hinsichtlich Funktionalität und Einbaubarkeit im Getriebe weiterzuentwickeln. Erfindungsgemäß gelöst wird die Aufgabe durch einen Planetenradträger mit den Merkmalen des Patentanspruchs 1. Vorteilhafte Ausgestaltungen und Weiterbildungen der Erfindung ergeben sich aus den Unteransprüchen.

Ausgehend vom genannten Stand der Technik weist der erfindungsgemäße Planetenträger für einen Planetenradsatz einen Steg auf zur Aufnahme von Planetenradbolzen, auf denen Planetenräder des Planetenradsatzes gelagert sind. Auf der den Planetenrädern abgewandten Seite des Stegs grenzt ein Ölfangblech axial an eine Planfläche des Stegs an und ist am Steg befestigt, vorzugsweise an der Planfläche des Stegs. Das Ölfangblech deckt dabei die Planetenradbolzen axial beabstandet ab und bildet zusammen mit dem Steg eine zum Innendurchmesser hin geöffnete Schmierölkammer zur Führung einer Schmierölmenge zu einer Planetenradlagerung am Außendurchmesser der jeweiligen Planetenradbolzen. Der Schmierölkammer von einem Innendurchmesser her zugeführtes Schmieröl wird von der Schmierölkämmer in axiale Schmierbohrungen der Planetenradbolzen und von dort über radiale Schmierölbohrunger der Planetenradbolzen zur Planetenradlagerung geleitet, wobei diese axialen Schmierbohrungen der Planetenradbolzen in die Schmierölkammer münden. Der Steg weist ein Mitnahmeprofil auf zur formschlüssigen Verbindung des Planetenradträgers mit einem Getriebe-Bauelement, welches auf der den Planetenrädern abgewandten Seite des Stegs axial an den Planetenradträger angrenzt. Erfindungsgemäß ist vorgesehen, daß das Ölfangblech eine Vorrichtung aufweist zur Axialsicherung des an den Planetenradträger angrenzenden Getriebe-Bauelementes auf dem Mitnahmprofil des Stegs im montierten Zustand.

Diese zusätzliche Funktionalität des Ölfangblechs ermöglicht eine sehr kompakte, baulängensparende Verschachtelung von Planetenradträger, Ölfangblech und dem zum Planetenradträger benachbartem Getriebe-Bauelement, wobei die Montage der Komponenten sehr einfach und kostengünstig ist. Ein derartiges zum Planetenradträger benachbartes Getriebe-Bauelement kann beispielsweise ein Lamellenträger oder ein anderer Planetenradträger oder ein Hohlrad eines benachbarten Planetenradsatzes sein.

In einer bevorzugten Ausgestaltung ist das Ölfangblech nach seiner Montage an dem Steg unlösbar und zumindest weitgehend öldicht mit dem Steg verbunden, beispielsweise mittels Verrollung auf einem Durchmesser größer einem Teilkreisdurchmesser der Planetenradbolzen, oder durch eine Vernietung an der der Schmierölkammer zugewandten Planfläche des Stegs. Bevorzugt weist das Ölfangblech auf einem Durchmesser kleiner dem Teilkreisdurchmesser der Planetenradbolzen abgewinkelte Laschen auf, die sich etwa parallel zur Planetenbolzenachse axial in zu den Planetenradbolzen entgegengesetzter Richtung erstrecken und bei der Montage des an den Planetenradträger angrenzenden Getriebe-Bauelementes auf das Mitnahmeprofil des mit dem Ölfangblech komplettierten Stegs in entsprechende Ausnehmungen des Getriebe-Bauelementes axial eingreifen.

Dabei kann die Vorrichtung, durch die das an den Planetenradträger angrenzende Getriebe-Bauelement auf der Mitnahmeverzahnung des Stegs im montierten Zustand axial gesichert wird, als Bördelverschluß ausgebildet sein. Hierbei greifen die Laschen des Ölfangblechs nach Aufschieben eines Mitnahmeprofils des an der Planetenradträger angrenzenden Getriebe-Bauelementes auf das Mitnahmeprofil des Stegs durch die entsprechenden Ausnehmungen des Getriebe-Bauelementes hindurch und werden anschließend auf der dem Steg abgewandten Seite der Ausnehmungen umgebogen.

In einer anderen Ausgestaltung kann die Vorrichtung, mit der das an den Planetenradträger angrenzende Getriebe-Bauelement axial auf der Mitnahmeverzahnung des Stegs im montierten Zustand gesichert wird, auch als Bajonettverschluß oder Schnappverschluß ausgebildet sein. Dabei sind die Laschen des Ölfangblechs federelastisch ausgebildet und verrasten bei der Montage des an den Planetenradträger angrenzenden Getriebe-Bauelementes auf das Mitnahmeprofil des Stegs in oder an den entsprechenden Ausnehmungen des Getriebe-Bauelementes in Umfangsrichtung und/oder radialer Richtung.

In einer weiteren Ausgestaltung wird vorgeschlagen, die Vorrichtung, mit der das an den Planetenradträger angrenzende Getriebe-Bauelement axial auf der Mitnahmeverzahnung des Stegs im montierten Zustand gesichert wird, als Niet- oder Schweißverschluß auszubilden, wobei die Laschen des Ölfangblechs nach Aufschieben eines Mitnahmeprofils des an der Planetenradträger angrenzenden Getriebe-Bauelementes auf das Mitnahmeprofil des Stegs an oder in den Ausnehmungen des Getriebe-Bauelementes genietet bzw. verschweißt werden.

In noch einer weiteren Ausgestaltung kann die Vorrichtung, mit der das an den Planetenradträger angrenzende Getriebe-Bauelement axial auf der Mitnahmeverzahnung des Stegs im montierten Zustand gesichert wird, auch als Schraubverschluß ausgebildet sein. Dabei greifen die Laschen des Ölfangblechs nach dem formschlüssigen Fügen der Mitnahmeprofile des an der Planetenradträger angrenzenden Getriebe-Bauelementes und des Stegblechs durch die entsprechenden Ausnehmungen des Getriebe-Bauelementes hindurch und werden anschließend auf.der dem Steg abgewandten Seite der Ausnehmungen mit dem Getriebe-Bauelement verschraubt.

Als Weiterbildung für einen Planetenradträger mit auf unterschiedlichem Teilkreisdurchmesser angeordneten Planetenradbolzen wird zur Verbesserung der Schmierölzufuhr zu dem auf kleinerem Radius angeordneten Planetenradbolzen vorgeschlagen, axial zwischen dem Ölfangblech und der der Schmierölkammer zugewandten Planfläche des Stegs eine Dichtung vorzusehen. Dabei bildet die axiale Dichtspur dieser Dichtung eine geschlossene Kontur, die jeweils den Bereich der axialen Schmierölzuführung der einzelnen Planetenradbolzen radial außen umgreift und jeweils in den in Umfangsrichtung zwischen den einzelnen Planetenradbolzen liegenden Abschnitten segmentweise auf einem Durchmesser kleiner oder gleich dem Teilkreisdurchmesser der radial inneren Planetenradbolzen verläuft. Auf diese Weise wird das radial von innen nach außen in die Schmierölkammer eingebrachte Schmieröl zumindest weitgehend gleichmäßig auf innere und äußere Planetenradbolzen verteilt und einer Mangelschmierung der radial innenliegenden Planetenradlagerung vorgebeugt.

In folgenden wird die Erfindung anhand der Figuren näher beschrieben, wobei gleichartige Bauelemente auch mit gleichen Bezugszeichen versehen sind. Es zeigen
- Fig. 1: ein Ausführungsbeispiel eines erfindungsgemäßen Planetenradträgers;
- Fig. 2: eine Montageskizze einer beispielhaften Axialsicherung mit Bajonettverschluß;
- Fig. 3: eine Montageskizze einer beispielhaften Axialsicherung mit Schnappverschluß;
- Fig. 4: eine erste Ausgestaltungsvariante des Ausführungsbeispiels gemäß Fig. 1; erfindungsgemäßen Planetenradträgers;
- Fig. 5: eine zweite Ausgestaltungsvariante des Ausführungsbeispiels gemäß Fig. 1, mit einer ersten Dichtspurvariante am Ölfangblech; und
- Fig. 6: eine dritte Ausgestaltungsvariante des Ausführungsbeispiels gemäß Fig. 1, mit einer zweiten Dichtspurvariante am Ölfangblech.

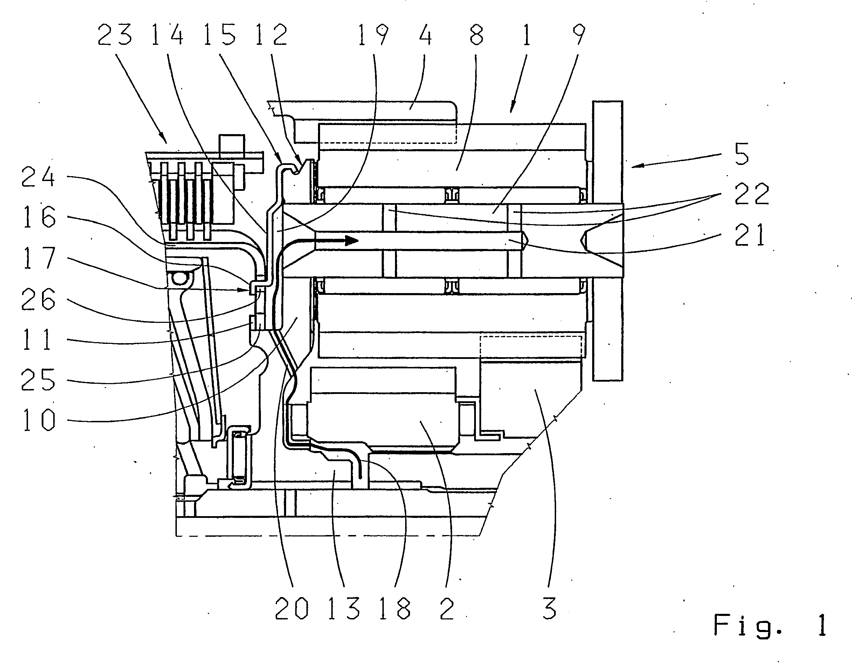

In Fig. 1 ist ein Schnittbild eines Ausführungsbeispiels des erfindungsgemäßen Planetenradträgers in montiertem Zustand dargestellt. Mit 1 ist ein Planetenradsatz - hier in bekannter Ravigneaux-Bauart - bezeichnet, mit einem ersten Sonnenrad 2, einem zweiten Sonnenrad 3, einem Hohlrad 4 und einem Planetenradträger 5. Der Planenradträger 5 weist einen Steg 10 auf zur Aufnahme von Planetenradbolzen, auf denen Planetenräder gelagert sind, wobei sich die Planetenbolzen in bekannter Weise rechtwinklig zur Planfläche des Stegs 10 erstrecken. Im dargestellten Schnittbild-Ausschnitt sind (mit dem Hohlrad 4 und dem zweiten Sonnenrad 3 kämmende) äußere Planetenräder des Ravigneaux-Planetenradsatzes mit 8 bezeichnet, äußere Planetenradbolzen mit 9. Bei dem Ravigneaux-Planetenradsatzes ebenfalls vorhandene (mit dem ersten Sonnenrad 2 und den äußeren Planetenräders 8 kämmende) innere Planetenräder und deren innere Planeteradbolzen sind in dem Schnittbild-Ausschnitt der Fig. 1 nicht dargestellt. Beispielhaft ist der Steg 10 einstückig mit einer Nabe 13 des Planetenradträgers 5 ausgeführt.

Axial neben dem Planetenradsatz 1, auf der den Planetenrädern 8 abgewandten Seite des Stegs 10, ist ein zum Planetenradsatz 1 benachbartes Getriebe-Bauelement angeordnet, hier beispielhaft ein Schaltelement 23. Dabei grenzt ein beispielhaft als Innenlamellenträger ausgebildeter Lamellenträger 24 axial an den Steg 10 an und ist formschlüssig mit dem Steg 10 über ein Mitnahmeprofil 25 verbunden, welches in montiertem Zustand in ein entsprechendes Mitnahmeprofil 11 des Stegs 10, das auf der den Planetenrädern abgewandten Seite des Stegs 10 angeordnet ist, eingreift. Bei der Montage des Lamellenträgers 24 an den (komplettierten) Planetenradträger 5 wird das Mitnahmeprofil 25 des Lamellenträgers 24 also auf das Mitnahmeprofil 11 des Stegs 10 in axialer Richtung aufgeschoben.

Zur Schmierung der Planetenradlagerung weisen die äu-ßeren Planetenbolzen 9 und die nicht dargestellten inneren Planetenbolzen des Planetenradsatzes 1 in bekannter Weise axiale Schmierbohrungen 21 und in diese axiale Schmiermierbohrungen 21 mündende radiale Schmierbohrungen 22 auf. Dabei sind die axialen Schmierbohrungen 21 als zur Planfläche des Stegs 10 hin offene Sackbohrungen ausgebildet. Die zur Schmierung der Planetenradlagerung erforderliche Schmierölmenge wird also in die axialen Schmierbohrungen der Planetenbolzen von der den Planetenrädern abgewandte Seite des Stegs 10 her eingebracht.

Von einem Innendurchmesser des Planetenradsatzes 1 her zugeleitetes Schmieröl strömt aufgrund der Fliehkraft radial nach außen, in dem.dargestellten Ausführungsbeispiel zunächst durch eine Schmierbohrung 20 des rotierenden Stegs 10 und anschließend an der Planfläche des Stegs 10 entlang auf dessen den Planetenrädern abgewandten Seite. Zur Verbesserung der Schmierölzufuhr in die axialen Schmierbohrungen 21 der Planetenradbolzen ist ein scheibenförmiges Ölfangblech 14 vorgesehen, welches an die Planfläche des Stegs 10 auf dessen den Planetenrädern abgewandten Seite unmittelbar axial angrenzt und zusammen mit dem Steg 10 eine zum Innendurchmesser hin geöffnete Schmierölkammer 19 bildet. Dabei deckt das Ölfangblech 14 die Planetenradbolzen axial beabstandet ab und liegt in einem Abschnitt, der einen größeren Durchmesser aufweist als der Teilkreisdurchmesser der Planetenradbolzen 9, am Steg 10 an. Die Befestigung des Ölfangblechs 14 am Steg 10 ist im dargestellten Ausführungsbeispiel in vorteilhaft einfacher weise als Verrollung ausgebildet, wobei ein Verrollungsabschnitt 15 des Ölfangblechs 14 den Außendurchmesser des Stegs 10 axial in Richtung der Planetenräder 9 übergreift und im montierten Zustand an einem Hinterschnitt 12 des Stegs 10 eingerollt ist. Zweckmäßigerweise ist die Verrollung zumindest weitgehend öldicht ausgeführt. Selbstverständlich kann anstelle des Hinterschnitts 12 auch eine Radialnut vorgesehen sein. Sowohl der Hinterschnitt 12 als auch eine entsprechend ausgeführte Radialnut am Umfang des. Stegs 10 gewährleisten eine (zumindest) in axialer Richtung sichere Befestigung des Ölfangblechs 14 an dem Planetenradträger 5 bzw. dem Steg 10. Selbstverständlich kann das Ölfangblech 14 auch in geeigneter Weise axial an der der Schmierölkammer 19 zugewandten Planfläche des Stegs 10 befestigt werden. Wesentlich in diesem Zusammenhang ist nur, daß die axiale Verbindung zwischen Ölfangblech und Steg Kräfte, die von außen in das Ölfangblech eingeleitet werden, bis zu einem gewissen Maß auf den Planetenradträger übertragen kann, und daß eine zum Innendurchmesser hin geöffneten Schmierölkammer gebildet wird, in die das von innen entlang der Planfläche des Stegs nach außen strömende Schmieröl gelangt und dort aufgestaut wird. Das in der Schmierölkammer 19 aufgestaute Schmieröl wird in bekannter Weise in die axialen Schmierbohrungen 21 der Planetenradbolzen geleitet. Der entsprechende Schmierölfluß ist in Fig. 1 mit 18 bezeichnet.

Erfindungsgemäß ist dem Ölfangblech 14 eine weitere Funktion zugewiesen, nämlich die axiale Sicherung des Lamellenträgers 24 an dem Planetenradträger 5 im montierten Zustand auf dem Mitnahmeprofil 11 des Stegs 10. Hierzu weist das Ölfangblech 14 im Bereich seines Innendurchmessers, auf einem Durchmesser kleiner einem Teilkreisdurchmesser der Planetenradbolzen, mindestens eine abgewinkelte Lasche 16 auf, die sich etwa parallel zur Planetenbolzenachse axial in zum Steg 10 entgegengesetzter Richtung erstreckt. Zweckmäßigerweise sind am Umfang des Ölfangblechs 14 verteilt mehrere abgewinkelte Laschen 16 vorgesehen. Der Lamellenträger 24 weist den jeweiligen Laschen 16 zugeordnete Ausnehmungen 26 auf, in welche die Laschen 16 beim Aufschieben des Lamellenträger-Mitnahmeprofils 25 auf das Stegblech-Mitnahmeprofil 11 eingreifen.

In dem in Fig. 1 dargestellten Ausführungsbeispiel ist die Axialsicherung des Lamellenträgers 24 an dem mit dem Ölfangblech 14 komplettierten Steg 10 als Bördelverbindung ausgebildet, wobei Fig. 1 den montierten Zustand zeigt. Beim formschlüssigen Fügen der Mitnahmeprofile 25 und 11 durchgreifen die Laschen 16 des Ölfangblechs 14.die ihnen zugeordneten Ausnehmungen 26 des Lamellenträgers 24. Anschließend erfolgt mittels geeignetem Werkzeug eine Umbördelung 17 der Laschen 16 jeweils in einen Bereich radial und/oder in Umfangsrichtung außerhalb der Ausnehmungen 26, derart, daß das Mitnahmeprofil 25 des Lamellenträgers 24 sich infolge der nun umgebogenen Abschnitte der Laschen 16 in axialer Richtung nicht mehr von dem Mitnahmeprofil 11 des Stegs 10 lösen kann. In Fig. 1 ist eine Umbördelung radial nach innen dargestellt. Die Axialsicherung kann dabei sowohl axialspielfrei als auch axialspielbehaftet - beispielsweise mit einem definierten Axialspiel - ausgeführt sein.

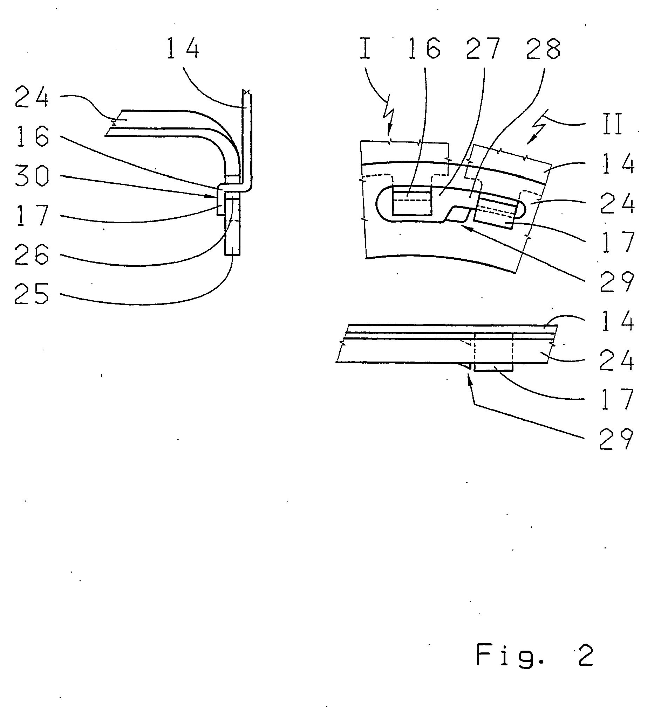

Fig. 2 zeigt eine vereinfachte Montageskizze für einen beispielhaften Bajonettverschluß als erfindungsgemäße Axialsicherung des axial zum Planetenradträger benachbarten Getriebe-Bauelementes auf dem Mitnahmeprofil des (zur Vereinfachung der Darstellung hier nicht gezeichneten) Planetenradträger-Stegs im montierten Zustand. Mit 14 ist das Ölfangblech bezeichnet, mit 24 der Lamellenträger als beispielhaftes Getriebe-Bauelement, das an das Ölfangblech 14 axial unmittelbar angrenzt. Vergleichbar zu Fig. 1, ist das Ölfangblech 14 mit dem (hier nicht dargestellten) Steg des Planetenradträgers derart verbunden ist, daß Axialkräfte zwischen Planetenradträger und Lamellenträger 24 über das Ölfangblech 14 übertragbar sind. Ebenfalls vergleichbar zu Fig. 1, erfolgt die Drehmomentübertragung zwischen dem (hier nicht dargestellten) Stegblech und dem Lamellenträger 24 im montierten Zustand über entsprechend ausgebildete Mitnahmeprofile, das Mitnahmeprofil des Lamellenträgers 24 ist mit 25 bezeichnet. Die den abgewinkelten Laschen 16 des Ölfangblechs 14 zugeordneten Ausnehmungen des Lamellenträgers 24 sind unverändert mit 26 bezeichnet.

Zur Realisierung eines bajonettartigen Verschlusses zwischen Ölfangblech 14 und Lamellenträger 24 sind die abgewinkelten Laschen 16 des Ölfangblechs 14 erfindungsgemäß federelastisch ausgebildet, jeweils mit einem doppelt abgekröpften, federelastischen Abschnitt 30. Erfindungsgemäß weisen die Ausnehmungen 26 des Lamellenträgers 24 jeweils einen Fügeabschnitt 27 und jeweils einen Verrastungsabschnitt 28 auf, wobei sich der Verrastungsabschnitt 28 jeweils an den Fügeabschnitt 27 in Umfangsrichtung gesehen gleichsinnig anschließt. Dabei weist der Fügeabschnitt 27 eine größere radiale Erstreckung auf als der Verrastungsabschnitt 28. Die federelastischen Abschnitte 30 der Laschen 16 weisen jeweils eine Umbördelung 17 auf, deren radiale Erstreckung einerseits kleiner ist als die radiale Erstreckung des Fügeabschnitts 27 der Lamellenträger-Ausnehmungen 26, andererseits größer ist als die radiale Erstreckung des Verrastungsabschnitts 28 der Lamellenträger-Ausnehmungen 26.

Mit "I" ist in Fig. 2 eine Draufsicht auf die erfindungsgemäße Axialsicherung in Fügestellung bezeichnet, mit "II" in Verrastungsstellung. Beim Aufschieben des Lamellenträger-Mitnahmeprofis 25 auf das korrespondierende (in Fig. 2 nicht dargestellte) Mitnahmeprofil des mit dem Ölfangblech 14 - zu diesem Zeitpunkt noch ohne Verrollung - komplettierten Planetenradträger-Stegs greifen die doppelt abgekröpften Laschen 16 mitsamt Umbördelung 17 zunächst durch die Fügeabschnitte 27 der den einzelnen Laschen 16 zugeordneten Ausnehmungen 26 des Lamellenträgers 24 axial hindurch (Fügestellung "I"). Im weiteren Montageablauf werden Lamellenträger 24 und Planetenradträger bzw. Ölfangblech 14 gegeneinander in Umfangsrichtung soweit verdreht, bis die Laschen 16 die Lamellenträger-Ausnehmungen 26 nunmehr im Bereich deren Verriegelungsabschnitte 28 axial durchdringen (Verrastungsstellung "II"). Infolge der größeren radialen Erstreckung der Umbördelung 17 der Ölfangblech-Laschen 16 gegenüber der radialen Erstreckung der Verriegelungsabschnitte 28 der Lamellenträger-Ausnehmungen 26 ist der Lamellenträger 24 nunmehr axial gegenüber dem Planetenradsatz bzw. gegenüber dem Steg des Planetenradträgers fixiert.

Zur Verhinderung eines unbeabsichtigten Lösens der Axialsicherung weist der Lamellenträger 24 auf seiner der Bördelung 17 zugewandten Seite zweckmäßigerweise eine oder mehrere auf dem Umfang verteilte Rastnasen 29 auf, die in Umfangsrichtung gesehen jeweils zwischen Fügeabschnitt 27 und Verriegelungsabschnitt 28 der Lamellenträger-Ausnehmungen 26 angeordnet sind. Beim Verdrehen von Lamellenträger 24 und Planetenradträger bzw. Ölfangblech 14 aus der Fügestellung "I" in die Verrastungsstellung "II" gleiten die Umbördelungen 17 der Ölfangblech-Laschen 16 über diese Rastnasen 29 hinweg, wobei sich die federelastischen Laschen-Abschnitte 30 kurzzeitig elastisch verformen. Ein Zurückdrehen der Laschen 16 aus der Verrastungsstellung "II" zurück in die Fügestellung "I" wird durch die spezielle Kontur der Rastnasen 29 verhindert. Fertigungstechnisch sind derartige Rastnasen beispielsweise als Einprägung im Lamellenträger einfach herstellbar.

Es ist klar, daß die Verrollung (beispielhaft für die unlösbare Verbindung) zwischen Ölfangblech 14 und Planetenträger-Steg erst nach erfolgter Verrastung der bajonettartigen Axialsicherung erfolgen kann.

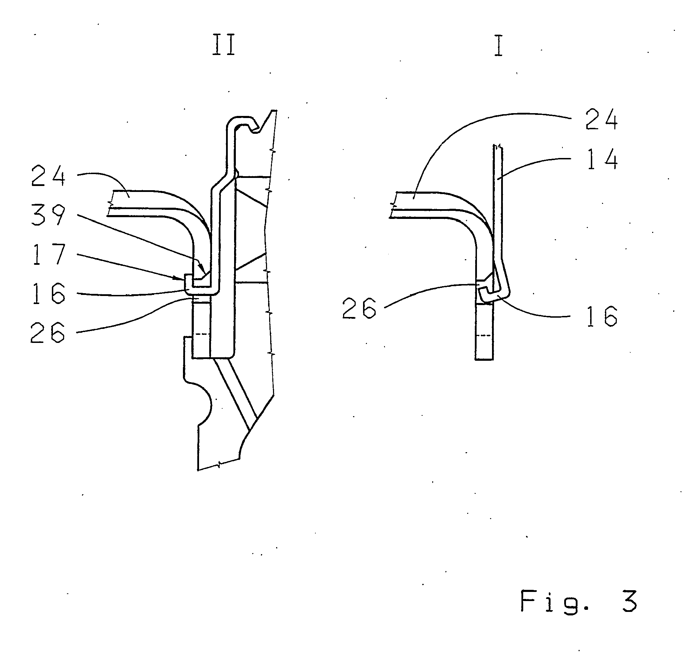

In einer in Fig. 3 dargestellten anderen Ausgestaltung der Axialsicherung des an den Planetenradträger angrenzenden Getriebe-Bauelementes auf der Mitnahmeverzahnung des Planetenradträger-Stegs im montierten Zustand sind die federelastischen Abschnitte der doppelt abgekröpften Laschen 16 des Ölfangblechs 14 mitsamt der entsprechenden Umbördelungen 17 derart ausgebildet, daß sich die Laschen 16 beim Hindurchschieben axial durch die den einzelnen Laschen 16 zugeordneten Ausnehmungen 26 des Lamellenträgers 24 kurzzeitig in radialer Richtung elastisch verformen (Fügestellung "I") und anschließend zurückfedern, sodaß sich die Umbördelungen 17 radial außerhalb der entsprechenden Lamellenträger-Ausnehmungen 26 erstrecken (Verrastungsstellung "II"). Auf diese Weise ist der Lamellenträger 24 dann axial gegenüber dem Planetenradsatz bzw. gegenüber dem Steg 10 des Planetenradträgers fixiert. Im Unterschied zu Fig. 2 sind die Ausnehmungen 26 des Lamellenträgers 24 nunmehr als Ausfräsung mit konstanter radialen Erstreckung ausgeführt. Zur Erleichterung der Montage dieser als Schnappverschluß ausgebildeten Axialsicherung kann an den Ausnehmungen 26 des: Lamellenträgers 24 auf dessen dem Steg 10 zugewandten Seite eine Phase 39 oder eine Abschrägung vorgesehen sein, welche die kurzzeitige federelastische Verformung der Laschen 16 beim Eintauchen in die entsprechenden Lamellenträger-Ausnehmungen 26 erleichtert. Um ein unerwünschtes Lösen des Schnappverschlusses durch Fliehkrafteinflüsse zu verhindern, erstrecken sich die Umbördelungen 17 der Laschen 16 zweckmäßigerweise radial nach außen und übergreifen die Lamellenträger-Ausnehmungen 26 an derem Außendurchmesser, wie in Fig. 3 dargestellt.

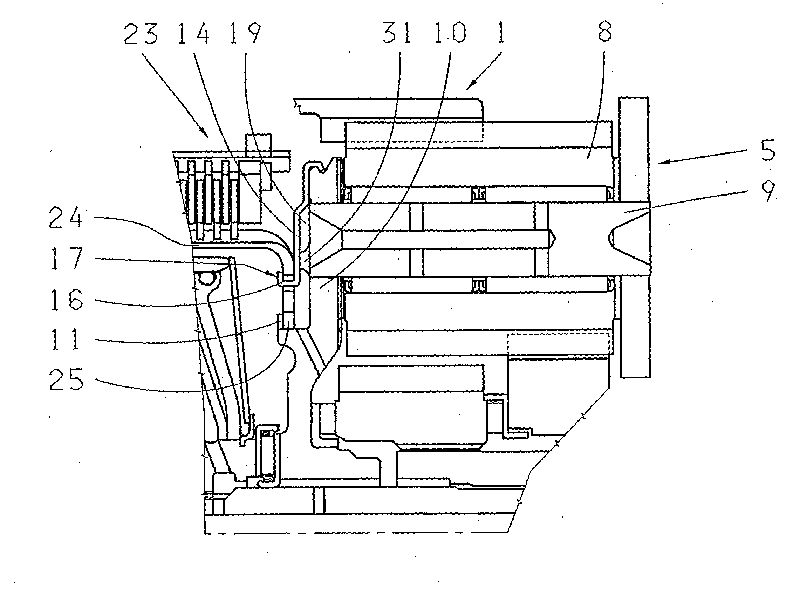

Fig. 4 zeigt eine erste Ausgestaltungsvariante des anhand Fig. 1 erläuterten Ausführungsbeispiels eines erfindungsgemäßen Planetenradträgers, nunmehr mit einer zusätzlichen Montagehilfe für die Umbördelung des Ölfangblechs. Im Unterschied zu Fig. 1 weist der Steg 10 des Planetenradträgers 5 nunmehr am Umfang verteilte Abstützsegmente 31 für den Bördelungsprozeß auf. Diese Äbstützelemente 31 sind auf der den Planetenrädern 8 des Planetenradsatzes 1 abgewandten Seite des Stegs 10 angeordnet, auf einem Durchmesser innerhalb der Schmierölkammer 19. Auf der dem Ölfangblech 14 bzw. dem Lamellenträger 24 des zum Planetenradsatz 1 benachbarten Schaltelementes 23 zugewandten Seite grenzen die Abstützelemente 31 an einen senkrechten Abschnitt des Ölfangblechs 14 an, auf einem Durchmesser im Bereich um die Lamellenträger-Ausnehmungen 26. Wird nun im Montageablauf der Lamellenträger 24 mit seinem Mitnahmeprofil 25 auf das korrespondierende Mitnahmeprofil 11 des mit dem Ölfangblech 14 komplettierten Stegs 10 axial aufgeschoben, so kann sich der Lamellenträger 24 über das Ölfangblech an den Abstützelementen 31 des Stegs 10 in axialer Richtung abstützen. Derartige Abstützelemente können beispielsweise als an die Planfläche des Stegs direkt angeformte Nasen oder als an den Steg angeschraubte oder angenietete oder angeschweißte Abstandsbolzen ausgeführt sein.

Wie bei dem anhand Fig. 1 erläuterten Ausführungsbeispiel ist die erfindungsgemäße Axialsicherung, durch die das an den Planetenradträger 5 angrenzende Getriebe-Bauelement (hier der Lamellenträger 24) auf der Mitnahmeverzahnung 11 des Planetenradträger-Stegs 10 im montierten Zustand in axialer Richtung fixiert ist, als Bördelverschluß ausgebildet. Hierzu weist das Ölfangblech 14 - wie in Fig. 1 - auf einem Durchmesser kleiner dem Teilkreisdurchmesser der Planetenradbolzen 9 abgewinkelte Laschen 16 auf, die sich etwa parallel zur Planetenbolzenachse axial in zu den Planetenradbolzen 9 entgegengesetzter Richtung erstrecken und bei der Montage des Lamellenträgers 24 auf das Mitnahmeprofil 11 des mit dem Ölfangblech 14 komplettierten Stegs 10 die den jeweiligen Laschen 16 zugeordneten Ausnehmungen 26 des Lamellenträgers 24 axial durchgreifen. Beim anschließenden Umbiegen der Laschenabschnitte, die sich nach erfolgter axialen Anlage des Lamellenträgers an das Ölfangblech 14 auf der dem Stegblech abgewandten Seite der Lamellenträger-Ausnehmungen 26 befinden, als Umbördelung 17, dienen die im Durchmesserbereich der Ausnehmungen 26 bzw. der Bördelung 17 angeordneten Abstützelementen 31 als Gegenlager. Mindestens bei dem Bördelungsprozeß liegt also das Ölfangblech 14 axial an den Abstützelementen 31 an, wodurch die Montagekräfte auf den (komplettierten) Planetenradträger übertragen werden. Hierdurch wird einerseits eine durch den Bördelungsprozeß verursachbäre unzulässige Verformung des Ölfangblechs 14 zuverlässig verhindert, gleichzeitig aber auch der Einsatz eines vergleichsweise einfachen Bördelungs-Werkzeugs ermöglicht. In Fig. 2 beispielhaft dargestellt ist eine Umbördelung radial nach außen.

Selbstverständlich ist die Anwendung einer derartigen Abstützung der Montagekräfte nicht beschränkt auf den in Fig. 2 beispielhaft dargestellten Bördelverschluß als Vorrichtung zur Axialsicherung des hier beispielhaften Lamellenträgers relativ zum Planetenradträger im montierten Zustand. Im Zusammenhang mit konzeptionell anderen Axialsicherungen können über eine derartige Abstützung beispielsweise auch axiale und/oder radiale Kräfte beim Vernieten bzw. Verschweißen bzw. Verschrauben der Laschen des Ölfangblechs an den Lamellenträger übertragen werden.

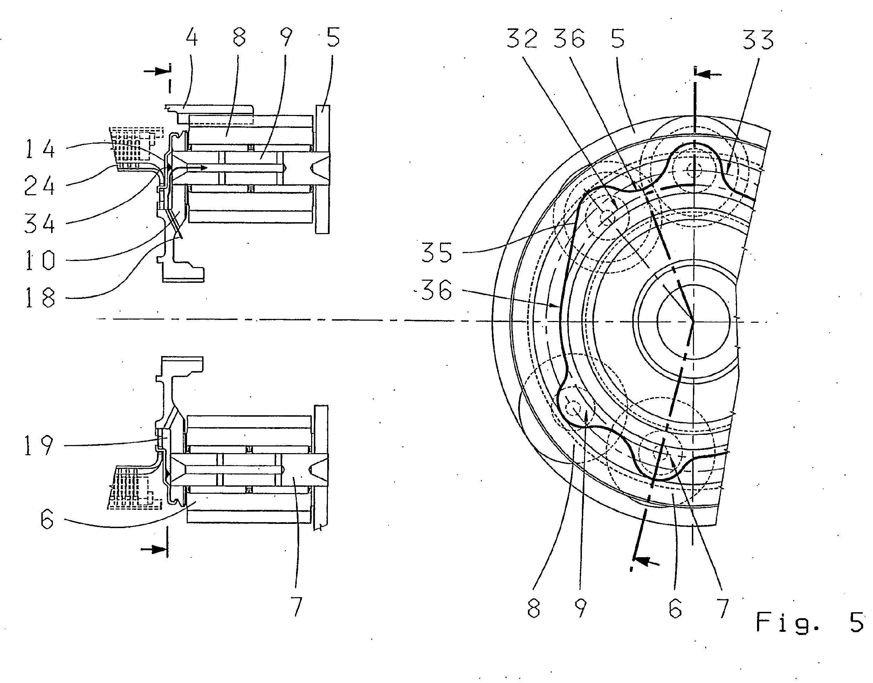

Aus der Praxis sind Planetenradsätze mit mehreren, auf unterschiedlichen Teilkreisdurchmessern angeordneten Planetenradbolzen bekannt, beispielsweise ein Ravigneaux-Planetenradsatz oder ein Plus-Planetenradsatz mit Doppelplaneten. Aufgrund der Fliehkraftwirkung erhalten bekannterweise die auf größerem Radius angeordneten Planetenräder bevorzugt Schmieröl. Hierdurch droht der auf kleinerem Radius angeordneten Planetenradlagerung eine Mangelschmierung. Fig. 5 zeigt nun eine zweite, auf dem anhand Fig. 1 erläuterten Ausführungsbeispiel basierende Ausgestaltungsvariante eines erfindungsgemäßen Planetenradträgers, die sich in besonderer Weise für derartige Planetenradsätze eignet. In dem in Fig. 5 vereinfacht dargestellten Schnittbild ist der Planetenradträger unverändert mit 5 bezeichnet, dessen Steg mit 10. Auf einem inneren Teilkreisdurchmesser 32 sind radial innere Planetenradbolzen 7 axial in den Steg 10 eingesetzt, auf einem äußeren Teilkreisdurchmesser 33 radial äußere Planetenradbolzen 9. Auf dem inneren Planetenradbolzen 7 gelagerte radial innere Planetenräder sind mit 6 bezeichnet, auf dem äußere Planetenradbolzen 9 gelagerte radial äußere Planetenräder mit 8. Wie bei einem Ravigneaux-Planetenradsatz üblich, kämmen die äußeren Planetenräder 8 mit einem Hohlrad 4. Wie in Fig. 1 ist auf der den Planetenrädern 6, 8 abgewandten Seite des Stegs 10 ein benachbarter Lamellenträger 24 angeordnet, der über ein geeignetes Mitnahmeprofil im montierten Zustand formschlüssig mit dem Steg 10 verbunden ist. Ebenfalls wie in Fig. 1 grenzt das Ölfangblech 14 an die Planfläche des Stegs 10 auf der den Planetenrädern 6, 8 abgewandten Seite des Stegs 10 unmittelbar an und ist am Außendurchmesser des Stegs 10 derart verrollt, daß in das Ölfangblech 14 eingeleitete Axialkräfte von dem Ölfangblech 14 auf den Planetenradträger 5 übertragbar sind. Auf die Erklärung der gegenüber Fig. 1 unveränderten Vorrichtung zur Axialsicherung des Lamellenträgers 24 relativ zum Planetenradträger 5 in montiertem Zustand als zusätzliche Funktion des Ölfangblechs 14 kann an dieser Stelle verzichtet werden.

Um eine zumindest annähernd gleichmäßige Verteilung des Schmieröls, das radial von innen nach außen in die durch Steg 10 und Ölfangblech 14 gebildete Schmierölkammer 19 eingebracht wird (Schmierölfluß 18), auf alle Planetenradbolzen 7, 9 zu erzielen, ist bei der zweiten Ausgestaltungsvariante des erfindungsgemäßen Planetenradträgers gemäß Fig.5 axial zwischen dem Ölfangblech 14 und der der Schmierölkammer 19 zugewandten Planfläche des Stegs 10 eine spezielle Dichtung 34 mit geschlossener Kontur angeordnet. Im komplettierten Zustand von Steg 10 und Ölfangblech 14 begrenzt die Dichtung 32 die Schmierölkammer 19 in radialer Richtung mit einer axialen Dichtspur 35, die jeweils den Bereich der axialen Schmierölzuführung der einzelnen Planetenradbolzen, 7, 9 radial außen umgreift und jeweils in den in Umfangsrichtung zwischen radial innerem Planetenradbolzen 7 und radial äußeren Planetenradbolzen 9 liegenden Abschnitten 36 segmentweise auf einem Durchmesser kleiner oder gleich dem Teilkreisdurchmesser 32 der radial inneren Planetenradbolzen 5 verläuft. Diese in Richtung kleineren Durchmesser gezogenen Abschnitte 36 der Dichtspur 35 bzw. der Dichtung 34 bewirken eine Verteilung des von innen in die Schmierölkammer 19 einströmenden Schmieröls auf die jeweils zum Abschnitt 36 in Umfangsrichtung benachbarten Planetenradbolzen 7 und 9.

In dem in Fig. 5 dargestellten Beispiel ist die Dichtung 34 fertigungstechnisch einfach als direkt auf das Ölfangblech 14 anvulkanisierte Dichtlippe ausgebildet. Selbstverständlich kann die Dichtung auch direkt auf die Planfläge des Stegs anvulkanisiert sein oder auch als separates Bauteil ausgebildet sein, welches im montierten Zustand in eine korrespondierende Aufnahmekontur (in der Regel eine Nut) des Ölfangblechs bzw. des Stegs eingelegt ist.

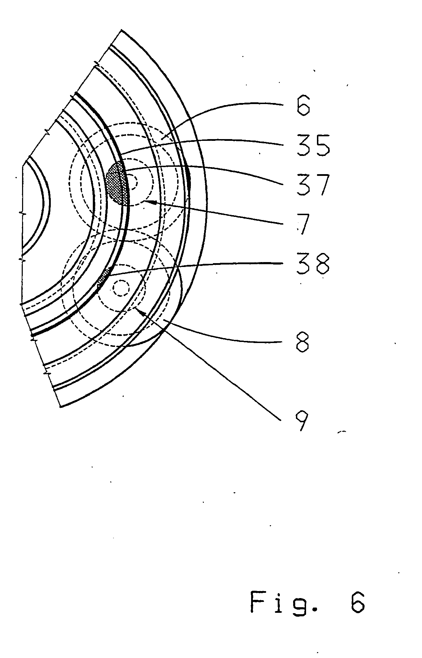

Fig. 6 schließlich zeigt eine dritte Ausgestaltungsvariante des anhand Fig. 5 erläuterten Ausführungsbeispiels eines erfindungsgemäßen Planetenradträgers, mit einer zweiten Dichtspurvariante am Ölfangblech. Im Unterschied zu Fig. 5 bildet die zwischen Ölfangblech und Planfläche des Stegs angeordnete Dichtung nunmehr eine weitgehend kreisrunde axiale Dichtspur 35. Wie in Fig. 6 ersichtlich, überstreicht die Dichtspur 35 dabei alle Planetenradbolzen 7, 9 in Umfangsrichtung, auf einem Durchmesser nahe dem (nicht dargestellten) Teilkreisdurchmesser des radial inneren Planetenräder 6. Zur Erzielung einer zumindest annähernd gleichmäßigen Verteilung des Schmiermittels zur Schmierung der Planetenradlagerungen auf alle Planetenradbolzen 7, 9 der inneren und äußeren Planetenräder 6, 8 sind die jeweiligen (straffiert dargestellten) Eintrittsflächen 37 der Schmierölzufuhr in die axialen Schmierbohrungen der radial inneren Planetenradbolzen 7 und die jeweiligen (straffiert dargestellten) Eintrittsflächen 38 der Schmierölzufuhr in die axialen Schmierbohrungen der radial äußeren Planetenradbolzen 9 aufeinander abgestimmt. Wie in Fig. 6 ersichtlich, ist die dem radial inneren Planetenrad 6 zugeordnete Eintrittsfläche 37 dabei größer als die dem radial äußeren Planetenrad 8 zugeordnete Eintrittsfläche 38.

### Bezugszeichen

- 1: Planetenradsatz
- 2: erstes Sonnenrad
- 3: zweites Sonnenrad
- 4: Hohlrad
- 5: Planetenradträger
- 6: radial inneres Planetenrad
- 7: radial innerer Planetenradbolzen
- 8: radial äußeres Planetenrad
- 9: radial äußerer Planetenradbolzen
- 10: Steg des Planetenradträgers
- 11: Mitnahmeprofil des Stegs
- 12: Hinterschnitt des Stegs
- 13: Nabe des Planetenradträgers
- 14: Ölfangblech
- 15: Verrollungsabschnitt des Ölfangblechs
- 16: Lasche des Ölfangblechs
- 17: Umbördelung der Lasche
- 18: Schmierölfluß
- 19: Schmierölkammer
- 20: Schmierbohrung des Stegs
- 21: axiale Schmierbohrung des Planetenradbolzens
- 22: radiale Schmierbohrung des Planetenradbolzens
- 23: Schaltelement
- 24: an den Planetenradträger angrenzendes GetriebeBauelement; Lamellenträger
- 25: Mitnahmeprofil des Lamellenträgers
- 26: Ausnehmung
- 27: Fügeabschnitt der Ausnehmung
- 28: Verrastungsabschnitt der Ausnehmung
- 29: Sicherungsnase des Lamellenträgers
- 30: federelastischer Abschnitt des Ölfangblechs
- 31: Abstützelement des Stegs
- 32: Teilkreisdurchmesser des inneren Planetenradbolzens
- 33: Teilkreisdurchmesser des äußeren Planetenradbolzens
- 34: Dichtung des Ölfangblechs
- 35: Dichtspur der Dichtung
- 36: Abschnitt der Dichtspur
- 37: Eintrittsfläche des Schmieröls in die axiale Schmierbohrung des radial inneren Planetenradbolzens
- 38: Eintrittsfläche des Schmieröls in die axiale Schmierbohrung des radial äußeren Planetenradbolzens
- 39: Phase des Stegs

- I: Fügestellung der Axialsicherung
- II: Verrastungsstellung der Axialsicherung

## Patentansprüche

1. Planeteriradträger (5) für einen Planetenradsatz (1), mit einem Steg (10) zur Aufnahme von Planetenradbolzen (7, 9), auf denen Planetenräder (6, 8) des Planetenradsatzes (1) gelagert sind, mit einem Ölfangblech (14), welches auf der den Planetenrädern (6, 8) abgewandten Seite des Stegs (10) axial an den Steg (10) angrenzt und zusammen mit dem Steg (10) eine zum Innendurchmesser hin geöffnete Schmierölkammer (19) bildet zur Führung einer Schmierölmenge in Schmierbohrungen (21, 22) der Planetenradbolzen (7, 9) hinein, wobei der Steg (10) ein Mitnahmeprofil (11) aufweist zur formschlüssigen Verbindung des Planetenradträgers (5) mit einem Getriebe-Bauelement (24), welches auf der den Planetenrädern (6, 8) abgewandten Seite des Stegs (10) axial an den Planetenradträger (5) angrenzt, **dadurch gekennzeichnet, daß** das Ölfangblech (14) eine Vorrichtung aufweist zur Axialsicherung des an den Planetenradträger (5) angrenzenden Getriebe-Bauelementes (24) auf dem Mitnahmprofil (11) des Stegs (10) im montierten Zustand.

2. Planetenträger nach Anspruch 1, **dadurch gekennzeichnet, daß** das Mitnahmeprofil (11) des Stegs (10) auf der den Planetenrädern (6, 8) abgewandten Seite des Stegs (10) angeordnet ist.

3. Planetenträger nach Anspruch 1 oder 2, **dadurch gekennzeichnet, daß** das Ölfangblech (14) nach seiner Montage an dem Steg (10) unlösbar mit dem Steg (10) verbunden ist.

4. Planetenträger nach Anspruch 3, **dadurch gekennzeichnet, daß** die unlösbare Verbindung zwischen Ölfangblech (14) und Steg (10) auf einem Durchmesser größer einem Teilkreisdurchmesser (33, 32) der Planetenradbolzen (9, 7) angeordnet ist.

5. Planetenträger nach Anspruch 3 oder 4, **dadurch gekennzeichnet, daß** das Ölfangblech (14) an einer der Schmierölkammer (19) zugewandten Planfläche des Stegs (10) angenietet ist.

6. Planetenträger nach Anspruch 4, **dadurch gekennzeichnet, daß** die unlösbare Verbindung zwischen Ölfangblech (14) und Steg (10) als Verrollung ausgeführt ist, wobei der Steg (10) im Bereich seines Außendurchmessers eine entsprechende Radialnut oder einen entsprechenden Hinterschnitt (12) aufweist.

7. Planetenträger nach einem der Ansprüche 1 bis 6, **dadurch gekennzeichnet, daß** das Ölfangblech (14) auf einem Durchmesser kleiner dem Teilkreisdurchmesser (32, 33) der Planetenradbolzen (7, 9) abgewinkelte Laschen (16) aufweist, die sich etwa parallel zur Planetenbolzenachse axial in zu den Planetenradbolzen (7, 9) entgegengesetzter Richtung erstrecken und bei der Montage des an den Planetenradträger (5) angrenzenden Getriebe-Bauelementes (24) auf das Mitnahmeprofil (11) des mit dem Ölfangblech (14) komplettierten Stegs (10) in entsprechende Ausnehmungen (26) des Getriebe-Bauelementes (24) axial eingreifen.

8. Planetenträger nach Anspruch 7, **dadurch gekennzeichnet, daß** die Vorrichtung, durch die das an den Planetenradträger (5) angrenzende Getriebe-Bauelement (24) axial auf der Mitnahmeverzahnung (11) des Stegs (10) im montierten Zustand gesichert wird, als Bördelverschluß ausgebildet ist, wobei die Laschen (16) des Ölfangblechs (14) nach Aufschieben eines Mitnahmeprofils (25) des Getriebe-Bauelementes (24) auf das Mitnahmeprofil (11) des Stegs (10) durch die entsprechenden Ausnehmungen (26) des Getriebe-Bauelementes (24) hindurchgreifen und anschließend auf der dem Steg (10) abgewandten Seite der Ausnehmungen (26) umgebogen werden.

9. Planetenträger nach Anspruch 7, **dadurch gekennzeichnet, daß** die Vorrichtung, durch die das an den Planetenradträger (5) angrenzende Getriebe-Bauelement (24) axial auf der Mitnahmeverzahnung (11) des Stegs (10) im montierten Zustand gesichert wird, als Bajonettverschluß ausgebildet ist, wobei die Laschen (16) des Ölfangblechs (14) federelastisch ausgebildet sind und beim Aufschieben eines Mitnahmeprofils (25) des Getriebe-Bauelementes (24) auf das Mitnahmeprofil (11) des Stegs (10) in oder an den entsprechenden Ausnehmungen (26) des Getriebe-Bauelementes (24) in Umfangsrichtung verrasten, und wobei Ölfangblech (14) und Steg (10) erst nach erfolgter Verrastung des Bajonettverschlusses unlösbar miteinander verbunden werden.

10. Planetenträger nach Anspruch 7, **dadurch gekennzeichnet, daß** die Vorrichtung, durch die das an den Planetenradträger (5) angrenzende Getriebe-Bauelement (24) axial auf der Mitnahmeverzahnung (11) des Stegs (10) im montierten Zustand gesichert wird, als Schnappverschluß ausgebildet ist, wobei die Laschen (16) des Ölfangblechs (14) federelastisch ausgebildet sind und beim Aufschieben eines Mitnahmeprofils (25) des Getriebe-Bauelementes (24) auf das Mitnahmeprofil (11) des Stegs (10) in oder an den entsprechenden Ausnehmungen (26) des Getriebe-Bauelementes (24) in radialer Richtung verrasten.

11. Planetenträger nach Anspruch 7, **dadurch gekennzeichnet, daß** die Vorrichtung, durch die das an den Planetenradträger (5) angrenzende Getriebe-Bauelement (24) axial auf der Mitnahmeverzahnung (11) des Stegs (10) im montierten Zustand gesichert wird, als Niet- oder Schweißverschluß ausgebildet ist, wobei die Laschen (16) des Ölfangblechs (14) nach Aufschieben eines Mitnahmeprofils (25) des Getriebe-Bauelementes (24) auf das Mitnahmeprofil (11) des Stegs (10) an oder in den Ausnehmungen (26) des Getriebe-Bauelementes (24) genietet bzw. verschweißt werden.

12. Planetenträger nach Anspruch 7, **dadurch gekennzeichnet, daß** die Vorrichtung, durch die das an den Planetenradträger (5) angrenzende Getriebe-Bauelement (24) axial auf der Mitnahmeverzahnung (11) des Stegs (10) im montierten Zustand gesichert wird, als Schraubverschluß ausgebildet ist, wobei die Laschen (16) des Ölfangblechs (14) nach Aufschieben eines Mitnahmeprofils (25) des Getriebe-Bauelementes (24) auf das Mitnahmeprofil (11) des Stegs (10) durch die entsprechenden Ausnehmungen (26) des Getriebe-Bauelementes (24) hindurchgreifen und anschließend auf der dem Steg (10) abgewandten Seite der Ausnehmungen (26) mit dem Getriebe-Bauelement (24) verschraubt werden.

13. Planetenträger nach einem der Ansprüche 8 bis 12, **dadurch gekennzeichnet, daß** der Steg (10) an seiner der Schmierölkammer (19) zugewandten Seite mindestens ein Abstützelement (31) axialer Erstreckung aufweist, welches auf einem Durchmesser innerhalb der Schmierölkammer (19) im Bereich um die Ausnehmungen (26) des an den Planetenradträger (5) angrenzenden Getriebe-Bauelementes (24) angeordnet ist, wobei das Ölfangblech (14) zumindest bei der Montage an dem Abstützelement (31) anliegt, wobei axiale und/oder radiale Kräfte bei der Montage der Axialsicherung über das Ölfangblech (14) auf den Planetenradträger (5) übertragbar sind, insbesondere Abstützkräfte beim Umbiegen bzw. Vernieten bzw. Verschweißen bzw. Verschrauben der Laschen (16) des Ölfangblechs (14).

14. Planetenträger nach Anspruch 13, **dadurch gekennzeichnet, daß** das Abstützsegment (31) als an die Planfläche des Stegs (10) direkt angeformte Nase ausgebildet ist.

15. Planetenträger nach Anspruch 13, **dadurch gekennzeichnet, daß** das Abstützsegment (31) als an den Steg (10) angeschraubter oder angenieteter oder angeschweißter Abstandsbolzen ausgebildet ist.

16. Planetenträger nach einem der Ansprüche 1 bis 15, **dadurch gekennzeichnet, daß** das an den Planetenradträger (5) angrenzende Getriebe-Bauelement (24) auf der Mitnahmeverzahnung (11) des Stegs (10) axialspielfrei gesichert wird.

17. Planetenträger nach einem der Ansprüche 1 bis 15, **dadurch gekennzeichnet, daß** das an den Planetenradträger (5) angrenzende Getriebe-Bauelement (24) auf der Mitnahmeverzahnung (11) des Stegs (10) mit Axialspiel gesichert wird.

18. Planetenträger nach einem der vorigen Ansprüche, **dadurch gekennzeichnet, daß** das Ölfangblech (14) nach seiner Montage an dem Steg (10) zumindest weitgehend öldicht mit dem Steg (10) verbunden ist.

19. Planetenträger nach Anspruch 18, **dadurch gekennzeichnet, daß** die zumindest weitgehend öldichte Verbindung zwischen Ölfangblech (14) und Steg (10) als Verrollung im Bereich des Außendurchmessers des Stegs (10) ausgebildet ist, wobei der Steg (10) im Bereich seines Außendurchmessers eine entsprechende Radialnut oder einen entsprechenden Hinterschnitt (12) aufweist.

20. Planetenträger nach einem der vorigen Ansprüche, **dadurch gekennzeichnet, daß** der Planetenradträger (5) Planetenradbolzen (7, 9) mit unterschiedlichem Teilkreisdurchmesser (32, 33) aufweist, und daß axial zwischen Ölfangblech (14) und Steg (10) eine Dichtung (34) angeordnet ist, deren axiale Dichtspur (35) die Schmierölkammer (19) in radialer Richtung begrenzt durch eine geschlossene Kontur, die jeweils den Bereich der axialen Schmierölzuführung der einzelnen Planetenradbolzen (7, 9) radial außen umgreift und jeweils in den in Umfangsrichtung zwischen einem radial inneren Planetenradbolzen (7) und einem radial äußeren Planetenradbolzen (9) liegenden Abschnitten (36) segmentweise auf einem Durchmesser kleiner oder gleich dem Teilkreisdurchmesser (32) der radial inneren Planetenradbolzen (7) verläuft, sodaß das radial von innen nach außen in die Schmierölkammer (19) eingebrachte Schmieröl zumindest weitgehend gleichmäßig auf innere und äußere Planetenradbolzen (7, 9) verteilt wird.

21. Planetenträger nach Anspruch 20, **dadurch gekennzeichnet, daß** die Dichtung (34) als Dichtlippe ausgebildet ist, die auf der dem Steg (10) zugewandten Seite des Ölfangblechs (14) auf dem Ölfangblech (14) anvulkanisiert ist.

22. Planetenträger nach Anspruch 20, **dadurch gekennzeichnet, daß** die Dichtung als Dichtlippe ausgebildet ist, die auf der Schmierölkammer zugewandten Planfläche des Stegs anvulkanisiert ist.

23. Planetenträger nach Anspruch 20, **dadurch gekennzeichnet, daß** die Dichtung als Formdichtung ausgebildet ist, die in eine entsprechende am Ölfangblech oder/und Steg vorgesehene Aufnahmekontur eingelegt ist.

24. Planetenträger nach einem der Ansprüche 1 bis 23, **dadurch gekennzeichnet, daß** das an den Planetenradträger (5) angrenzende Getriebe-Bauelement (24) ein Lamellenträger eines Schaltelementes (23) ist.

25. Planetenträger nach einem der Ansprüche 1 bis 23, **dadurch gekennzeichnet, daß** das an den Planetenradträger (5) angrenzende Getriebe-Bauelement ein Bauelement eines zweiten Planetenradsatzes ist, insbesondere ein Planetenradträger oder ein Hohlrad des zweiten Planetenradsatzes.

## Claims

1. The invention relates to a planet carrier (5) for a planetary set (1), with a spider (10) for the positioning of planetary bolts (7, 9), on which planet gears (6, 8) of the planetary set (1) are supported, with an oil retainer (14), which on the side of the spider (10) not facing the planet gears (6, 8) is axially adjacent to the spider (10), and together with the spider (10) forms a lube-oil chamber (19), which is open towards the inner diameter, for feeding a lube-oil quantity into lubricating bores (21, 22) of the planetary bolts (7,9), with the spider (10) featuring a driving profile (11) for positive coupling of the planet carrier (5) with a transmission component (24), which on the side of the spider (10) not facing the planet gears (6, 8) is axially adjacent to the planet carrier (5), **characterized in that** the oil retainer (14) features a device for axial fixing of the planet-carrier (5)-adjacent transmission component (24) to the driving profile (11) of the spider (10) in the assembled condition.

2. A planet carrier according to claim 1, **characterized in that** the driving profile (11) of the spider (10) is arranged on the side of the spider (10) not facing the planet gears (6, 8).

3. A planet carrier according to claim 1 or 2, **characterized in that** the oil retainer (14) once mounted to the spider (14) is inseparably connected to the spider (10).

4. A planet carrier according to claim 3, **characterized in that** the inseparable connection between oil retainer (14) and spider (10) is arranged on a diameter greater than a pitch-circle diameter (33, 32) of the planetary bolts (9, 7).

5. A planet carrier according to claim 3 or 4, **characterized in that** the oil retainer (14) is riveted to an end face of the spider (10) which faces the lube-oil chamber (19).

6. A planet carrier according to claim 4, **characterized in that** the inseparable connection between oil retainer (14) and spider (10) is designed as a flanged connection, with the spider (10) featuring a radial groove or an undercut (12) in the area of its outer diameter.

7. A planet carrier according to one of the claims 1 through 6, **charaterized** in that the oil retainer (14) on a diameter smaller than the pitch-circle diameter (32, 33) of the planetary bolts (7, 9) features offset lugs (16), which roughly parallel to the planetary bolt axis extend axially in opposite direction to that of the planetary bolts (7, 9) and axially mesh with recesses (26) of the transmission component (24), which adjacent to the planet carrier (5) is mounted onto the driving profile (11) of the spider (10), which is mounted to the oil retainer (14).

8. A planet carrier according to claim 7, **characterized in that** the device through which the planet-carrier (5)-adjacent transmission component (24) is axially fixed to the driving profile (11) of the spider (10) is designed as a flanged fastening, with the lugs (16) of the oil retainer (14) extending through the recesses (26) of the transmission component (24) once a driving profile (25) of the transmission component (24) is slipped onto the driving profile (11) of the spider (10), and with the lugs subsequently being bent over on the side of the recesses not facing the spider (10).

9. A planet carrier according to claim 7, **characterized in that** the device through which the planet-carrier (5)-adjacent transmission component (24) is axially fixed to the driving profile (11) of the spider (10) is designed as a bayonet fastening, with the lugs (16) of the oil retainer (14) being elastic and engaging in circumferential direction with the recesses (26) of the transmission component when a driving profile (25) of the transmission component (24) is slipped onto the driving profile (11) of the spider (10), and with the oil retainer (14) and the spider (10) being inseparably connected only after engagement of the bayonet fastening.

10. A planet carrier according to claim 7, **characterized in that** the device through which the planet-carrier (5)-adjacent transmission component (24) is axially fixed to the driving profile (11) of the spider (10) is designed as a spring-loaded catch, with the lugs (16) of the oil retainer (14) being elastic and engaging in radial direction with the recesses (26) of the transmission component when a driving profile (25) of the transmission component (24) is slipped onto the driving profile (11) of the spider (10).

11. A planet carrier according to claim 7, **characterized in that** the device through which the planet-carrier (5)-adjacent transmission component (24) is axially fixed to the driving profile (11) of the spider (10) is designed as a riveted or welded fastening, with the lugs (16) of the oil retainer (14) being riveted or welded to the recesses (26) of the transmission component (24) after a driving profile (25) of the transmission component (24) is slipped onto the driving profile (11) of the spider (10).

12. A planet carrier according to claim 7, **characterized in that** the device through which the planet-carrier (5)-adjacent transmission component (24) is axially fixed to the driving profile (11) of the spider (10) is designed as a screwed fastening, with the lugs (16) of the oil retainer (14) extending through the recesses (26) of the transmission component (24) after a driving profile (25) of the transmission component (24) is slipped onto the driving profile (11) of the spider, and with the lugs being screwed to the transmission component (24) on the side of the recesses (26) not facing the spider (10).

13. A planet carrier according to one of the claims 8 through 12, **characterized in that** on the side facing the lube-oil chamber (19), the spider (10) features at least one axially extending supporting element (31), which is arranged on a diameter within the lube-oil chamber (19) in the area of the recesses (26) of the planet-carrier (5)-adjacent transmission component (24), with the oil retainer (14) being adjacent to the supporting element (31) at least during assembly, and with axial and/or radial forces being transferable to the planet carrier (5) via the oil retainer (14) during assembly of the axial fastening, especially supporting forces resulting from the bending or riveting or welding or bolting of the lugs (16) of the oil retainer (14).

14. A planet carrier according to claim 13, **characterized in that** the supporting element (31) is designed as a nose on the end face of the spider (10).

15. A planet carrier according to claim 13, **characterized in that** the supporting element (31) is designed as a spacer bolt which is screwed, riveted or welded to the spider (10).

16. A planet carrier according to one of the claims 1 through 15, **characterized in that** the planet-carrier (5)-adjacent transmission component (24) is fixed to the driving profile (11) of the spider (10) without axial play.

17. A planet carrier according to one of the claims 1 through 15, **characterized in that** the planet-carrier (5)-adjacent transmission component (24) is fixed to the driving profile (11) of the spider (10) with axial play.

18. A planet carrier according to one of the preceding claims, **characterized in that** when the oil retainer (14) is mounted to the spider (10), its connection with the spider (10) is at least to a large extent oil-tight.

19. A planet carrier according to claim 18, **characterized in that** the largely oil-tight connection between oil retainer (14) and spider (10) is designed as a flanged connection in the area of the outer diameter of the spider (10), with the spider (10) featuring a radial groove or an undercut (12) in the area of its outer diameters.

20. A planet carrier according to one of the preceding claims, **characterized in that** the planet carrier (5) features planetary bolts (7, 9) of different pitch-circle diameters (32, 33), and that axially between oil retainer (14) and spider (10) there is a seal (34) whose axial sealing track (35) limits the lube-oil chamber in radial direction by a sealed contour, which radially surrounds the area of the axial lube-oil supply of each planetary bolt (7,9) and which runs in circumferentially aligned segments (36) between a radially internal planetary bolt (7) and a radially external planetary bolt (9) on a diameter smaller than or equal to the pitch-circle diameter (32) of the radially internal planetary bolts (7), so that the lube oil, radially fed from the inside outwards into the lube-oil chamber (19) is at least to a large extent equally spread onto the inner and outer planetary bolts (7, 9).

21. A planet carrier according to claim 20, **characterized in that** the seal (34) is designed as a sealing lip, which is scorched on the oil retainer (14) on the end face of the oil retainer (14) facing the spider (10).

22. A planet carrier according to claim 20, **characterized in that** the seal is designed as a sealing lip, which is scorched on the end face of the spider facing the lube-oil chamber.

23. A planet carrier according to claim 20, **characterized in that** the seal is designed as a mold seal, which is inserted into a contour provided on the oil retainer or/and the spider.

24. A planet carrier according to one of the claims 1 through 23, **characterized in that** the planet-carrier (5)-adjacent transmission component (24) is a disk carrier of a shifting component (23).

25. A planet carrier according to one of the claims 1 through 23, **characterized in that** the planet-carrier (5)-adjacent transmission component (24) is a component of a second planetary set, in particular a planet carrier or an internal gear of the second planetary set.

## Revendications

1. Porte-satellites (5) pour un train épicycloïdal (1) comprenant un voile (10) destiné à recevoir des axes de roues satellites (7, 9) sur lesquels sont montées rotatives des roues satellites (6, 8) du train épicycloïdal (1), comprenant un déflecteur d'huile (14) qui est axialement adjacent au voile (10) sur le côté du voile (10) qui est éloigné des roues satellites (6, 8) et qui forme avec le voile (10) une chambre à huile lubrifiante (19) ouverte vers le diamètre intérieur pour conduire une quantité d'huile lubrifiante dans des perçages de lubrification (21, 22) des axes (7, 9) des roues satellites, dans lequel le voile (10) comporte un profil d'entraînement (11) destiné à la liaison par sûreté de forme entre le porte-satellites (5) et un élément de boîte de vitesses (24) qui est axialement adjacent au porte-satellites (5) sur le côté du voile (10) qui est éloigné des roues satellites (6, 8), **caractérisé en ce que** le déflecteur d'huile (14) comporte un dispositif servant à fixer axialement l'élément de boîte de vitesses (24) adjacent au porte-satellites (5) sur le profil d'entraînement (11) du voile (10) à l'état monté.

2. Porte-satellites selon la revendication 1, **caractérisé en ce que** le profil d'entraînement (11) du voile (10) est disposé sur le côté du voile (10) qui est éloigné des roues satellites (6, 8).

3. Porte-satellites selon la revendication 1 ou 2, **caractérisé en ce que** le déflecteur d'huile (14) est relié au voile (10) de façon indémontable après son montage sur le voile (10).

4. Porte-satellites selon la revendication 3, **caractérisé en ce que** la liaison indémontable entre le déflecteur d'huile (14) et le voile (10) est disposée sur un diamètre plus grand que le diamètre primitif de référence (33, 32) des axes (9, 7) des roues satellites.

5. Porte-satellites selon la revendication 3 ou 4, **caractérisé en ce que** le déflecteur d'huile (14) est riveté à une surface plane du voile (10) qui est dirigée vers la chambre à huile lubrifiante (19).

6. Porte-satellites selon la revendication 4, **caractérisé en ce que** la liaison indémontable entre le déflecteur d'huile (14) et le voile (10) est constituée par un roulage, le voile (10) comportant alors dans la région de son diamètre extérieur une rainure radiale correspondante ou une contre-dépouille (12) correspondante.

7. Porte-satellites selon l'une des revendications 1 à 6, **caractérisé en ce que** le déflecteur d'huile (14) comporte, sur un diamètre plus petit que le diamètre primitif de référence (32, 33) des axes de roues satellites (7, 9), des pattes rabattues (16) qui s'étendent à peu près parallèlement à l'axe géométrique des axes des roues satellites dans la direction à l'opposé des axes (7, 9) des roues satellites et qui, lors du montage de l'élément de boîte de vitesses (24) qui est adjacent au porte-satellites (5) sur le profil d'entraînement (11) du voile (10) complété du déflecteur d'huile (14), sont engagées axialement dans des évidements correspondants (26) de l'élément de boîte de vitesses (24).

8. Porte-satellites selon la revendication 7, **caractérisé en ce que** le dispositif par lequel l'élément (24) de la boîte de vitesses qui est adjacent au porte-satellites (5) est fixé axialement sur la denture d'entraînement (11) du voile (10) à l'état monté, est constitué par un assemblage par bordage, les pattes (16) du déflecteur d'huile (14) étant engagées, après l'emmanchement d'un profil d'entraînement (25) de l'élément de boîte de vitesses (24) sur le profil d'entraînement (11) du voile (10) à travers les évidements correspondants (26) de l'élément de boîte de vitesses (24) et étant ensuite repliées sur le côté d'évidements (26) qui est éloigné du voile (10).

9. Porte-satellites selon la revendication 7, **caractérisé en ce que** le dispositif par lequel l'élément de boîte de vitesses (24), qui est adjacent au porte-satellites (5) et bloqué axialement sur le dispositif d'entraînement (11) du voile (10) à l'état monté, est constitué par un assemblage à baïonnette dans lequel les pattes (16) du déflecteur d'huile (14) sont élastiques à la façon de ressorts et qui, lors de l'emmanchement d'un profil d'entraînement (25) de l'élément de boîte de vitesses (24) sur le profil d'entraînement (11) du voile (10), s'encliquettent dans la direction circonférentielle dans ou sur des évidements correspondants (26) de l'élément de boîte de vitesses (24), le déflecteur d'huile (14) et le voile (10) étant assemblés entre eux par une liaison indémontable seulement après l'exécution de l'encliquetage de l'assemblage fermeture à baïonnette.

10. Porte-satellites selon la revendication 7, **caractérisé en ce que** le dispositif par lequel l'élément de boîte de vitesses (24), qui est adjacent au porte-satellites (5) et bloqué sur la denture d'entraînement (11) du voile (10) à l'état monté est constitué par un assemblage à déclic, dans lequel les pattes (16) du déflecteur d'huile (14) sont élastiques à la façon de ressorts et s'encliquettent dans la direction radiale dans ou sur les évidements correspondants (26) de l'élément de boîte de vitesses (24) lors de l'emmanchement d'un profil d'entraînement (25) de l'élément de boîte de vitesses (24) sur le profil d'entraînement (11) du voile (10).

11. Porte-satellites selon la revendication 7, **caractérisé en ce que** le dispositif par lequel l'élément de boîte de vitesse (24) qui est adjacent au porte-satellites et bloqué axialement sur la denture d'entraînement (11) du voile (10) à l'état monté est constitué par un assemblage riveté ou soudé, dans lequel les pattes (16) du déflecteur d'huile (14) sont rivetées ou soudées sur ou dans les évidements (26) de l'élément de boîte de vitesses (24) après l'emmanchement d'un profil d'entraînement (25) de l'élément de boîte de vitesses (24) sur le profil d'entraînement (11) du voile (10).

12. Porte-satellites selon la revendication 7, **caractérisé en ce que** le dispositif par lequel l'élément de boîte de vitesses (24) qui est adjacent au porte-satellites (5) et bloqué axialement sur la denture d'entraînement (11) du voile (10) à l'état monté, est constitué par un assemblage vissé, dans lequel les pattes (16) du déflecteur d'huile (14) sont engagées à travers les évidements correspondants (26) de l'élément de boîte de vitesses (24) après l'emmanchement d'un profil d'entraînement (25) de l'élément de boîte de vitesses (24) sur le profil d'entraînement (11) du voile (10) et sont ensuite vissées avec l'élément de boîte de vitesses (24) sur le côté des évidements (26) qui est éloigné du voile (10).

13. Porte-satellites selon l'une des revendications 8 à 12, **caractérisé en ce que** le voile (10) comporte, sur son côté dirigé vers la chambre à huile lubrifiante (19), au moins un élément d'appui (31) ayant une extension axiale et qui est disposé sur un diamètre à l'intérieur de la chambre à huile lubrifiante (19) dans la région qui entoure les évidements (26) de l'élément de boîte de vitesses (24) qui est adjacent au porte-satellites (5), le déflecteur d'huile (14) étant appuyé contre l'élément d'appui (31), au moins pendant le montage, tandis que des forces axiales et/ou radiales peuvent être transmises au porte-satellites (5) par l'intermédiaire du déflecteur d'huile (14) au moment du montage du blocage axial, en particulier des forces d'appui lors du rabattement, du rivetage, du soudage ou du vissage des pattes (16) du déflecteur d'huile (14).

14. Porte-satellites selon la revendication 13, **caractérisé en ce que** l'élément d'appui (31) est constitué par une dent venue directement de formage sur la surface plane du voile (10).

15. Porte-satellites selon la revendication 13, **caractérisé en ce que** le segment d'appui (31) est constitué par un boulon entretoise qui est vissé, riveté ou soudé sur le voile (10).

16. Porte-satellites selon l'une des revendications 1 à 15, **caractérisé en ce que** l'élément de boîte de vitesses (24), qui est adjacent au porte-satellites (5), est bloqué sans jeu axial sur la denture d'entraînement (11) du voile (10).

17. Porte-satellites selon l'une des revendications 1 à 15, **caractérisé en ce que** l'élément de boîte de vitesses (24), qui est adjacent au porte-satellites (5), est bloqué avec un jeu axial sur la denture d'entraînement (11) du voile (10).

18. Porte-satellites selon l'une des revendications précédentes, **caractérisé en ce que**, après son montage sur le voile (10), le déflecteur d'huile (14) est assemblé au voile (10) par une liaison au moins largement à joint étanche à l'huile.

19. Porte-satellites selon la revendication 18, **caractérisé en ce que** la liaison au moins largement étanche à l'huile entre le déflecteur d'huile (14) et le voile (10) est constituée par un roulage dans la région du diamètre extérieur du voile (10), le voile (10) comportant dans la région de son diamètre extérieur une gorge radiale appropriée ou une contre-dépouille appropriée (12).

20. Porte-satellites selon l'une des revendications précédentes, **caractérisé en ce que** le porte-satellites (5) comporte des axes de roues satellites (7, 9) ayant différents diamètres primitifs de référence (32, 33) et **en ce que**, entre le déflecteur d'huile (14) et le voile (10), considéré dans la direction axiale, est disposée une garniture d'étanchéité (34) dont la piste d'étanchéité axiale (35) limite la chambre à huile lubrifiante (19) dans la direction radiale par un contour fermé qui entoure radialement à l'extérieur la zone de l'amenée axiale d'huile lubrifiante aux différents axes de roues satellites (7, 9) et qui, dans les segments (36) qui se trouvent respectivement entre un axe de roue satellite radialement intérieur (7) et un axe de roue satellite radialement extérieur (9) dans la direction circonférentielle, s'étend par endroits sur un diamètre inférieur ou égal au diamètre primitif de référence (32) des axes de roues satellites radialement intérieurs (7), de sorte que l'huile lubrifiante qui est introduite dans la chambre à huile lubrifiante (19) dans le sens allant radialement de l'intérieur vers l'extérieur est répartie au moins largement uniformément sur les axes de roues satellites intérieurs et extérieurs (7, 9).

21. Porte-satellites selon la revendication 20, **caractérisé en ce que** la garniture d'étanchéité (34) est constituée par une lèvre d'étanchéité qui est vulcanisée sur le déflecteur d'huile (14) sur le côté du déflecteur d'huile (14) qui est dirigé vers le voile (10).

22. Porte-satellites selon la revendication 20, **caractérisé en ce que** la garniture d'étanchéité est constituée par une lèvre d'étanchéité qui est vulcanisée sur la surface plane du voile qui est dirigée vers la chambre à huile lubrifiante.

23. Porte-satellites selon la revendication 20, **caractérisé en ce que** la garniture d'étanchéité est constituée par une garniture d'étanchéité de forme qui est emboîtée dans un profil de logement prévu sur le déflecteur d'huile et/ou sur le voile.

24. Porte-satellites selon l'une des revendications 1 à 23, **caractérisé en ce que** l'élément de boîte de vitesses (24) qui est adjacent au porte-satellites (5) est un support de disques d'un élément de commande (23).

25. Porte-satellites selon une des revendications 1 à 23, **caractérisé en ce que** l'élément de boîte de vitesses qui est adjacent au porte-satellites (5) est un élément appartenant à un deuxième train épicycloïdal, en particulier un porte-satellites ou une couronne à denture intérieure du deuxième train épicycloïdal.
